# EUROPÄISCHE PATENTANMELDUNG

(11) **EP 4 737 780 A1**
(43) Veröffentlichungstag der Anmeldung: **06.05.2026**
(21) Anmeldenummer: 25213086.9
(22) Anmeldetag: 03.11.2025
(51) Int. Cl.: F16L 5/08, F16L 5/14, E04B 1/00, H02G 3/22

(54) **DICHTUNGSVORRICHTUNG MIT KRAFTEINLEITELEMENT**

(30) Priorität: 04.11.2024 DE 202024106294 U
(71) Anmelder: UGA System-Technik GmbH & Co. KG, 89542 Herbrechtingen (DE)
(72) Erfinder: FIEDLER, Holger, 89542 Herbrechtingen (DE)
(74) Vertreter: Eisenführ Speiser

(57) **Zusammenfassung**

Dichtungsvorrichtung (1) für den Einsatz in einer Bauwerkseinführung zum Abdichten von in das Bauwerk einzuführenden Leitungen, insbesondere in einer Dichtpackung (90), mit einem ersten Dichtkörper (2), einem zweiten Dichtkörper (4), einer ersten Spannplatte (10), einer zweiten Spannplatte (12) und einem Fixierelement (8), das zwischen der ersten Spannplatte (10) und der zweiten Spannplatte (12), vorzugsweise zwischen dem ersten Dichtkörper (2) und dem zweiten Dichtkörper (4) angeordnet ist. An dem Fixierelement (8) ist wenigstens ein Krafteinleitelement (32) angebracht, um Kräfte und Momente, die auf die Dichtungsvorrichtung (1) wirken, in die Bauwerkseinführung zu leiten.

## Beschreibung

Die Erfindung betrifft eine Dichtungsvorrichtung zum Abdichten wenigstens einer Leitung in einem Aufnahmestutzen einer Bauwerkseinführung, insbesondere Dichtpackung. Die Dichtungsvorrichtung umfasst wenigstens einen ersten Dichtkörper und einen zweiten Dichtkörper, eine erste Spannplatte an einem ersten axialen Ende der Dichtungsvorrichtung, eine zweite Spannplatte an einem zweiten axialen Ende der Dichtungsvorrichtung, wenigstens ein Spannelement wobei der erste Dichtkörper und/oder der zweite Dichtkörper dazu ausgebildet sind, durch das wenigstens eine Spannelement verpresst zu werden, und ein Fixierelement, wobei das Fixierelement wenigstens ein Krafteinleitelement aufweist, das dazu ausgebildet ist, auf die Dichtungsvorrichtung wirkende mechanische Lasten abzutragen. Die Erfindung betrifft ferner ein Dichtsystem, bestehend aus einem Aufnahmestutzen einer Bauwerkseinführung, insbesondere einer Dichtpackung, und einer Dichtungsvorrichtung, die Verwendung eines derartigen Dichtsystems, und Verfahren zum Einbau wenigstens einer wasserdichten Leitungseinführung in ein Bauwerk.

Bauwerke, z.B. Wohnhäuser, Bürogebäude oder Industriebauten werden mit einer Vielzahl von Leitungen, z.B. Stromleitung, TV-Kabel, Glasfaseranschlüssen, Rohren und Wasserleitungen versorgt. Häufig werden derartige Leitungen unterirdisch im Kellerbereich des Bauwerks von außen durch eine Kellerwand oder eine Bodenplatte in das Bauwerk eingeführt. Die Leitungen, und somit der Kellerbereich müssen gegenüber dem feuchten Erdreich, dem Grundwasser und/oder Witterungseinflüssen zuverlässig abgedichtet sein. Hierzu ist es bekannt, Hauseinführungen mit einer Dichtungsvorrichtung zu verwenden. Beim Errichten des Bauwerks wird eine Dichtpackung mit Aufnahmestutzen von fließfähigem, dann erstarrendem Material, z.B. Beton umschlossen. Durch den Aufnahmestutzen hindurch können Leitungen eingeführt werden, die mit einer Dichtungsvorrichtung umschlossen werden. Die Dichtungsvorrichtung umfasst elastisches Material, z.B. EPDM, welches zwischen Spannplatten abdichtend verpresst wird.

Die EP 0 790 454 A2 lehrt den Einsatz einer Dichtpackung mit einem Rohr zum Aufnehmen von Leitungen, wobei an einem Rohrende ein bajonettartiger Verschluss zum Verschließen eines Rohrflansches mit einem Deckel vorgesehen ist.

Eine Elastomermanschette zur Montage einer Leitung ist in der EP 3 712 479 A1 offenbart. Demnach wird ein Spannring mit Hilfe einer Spannschraube radial geweitet, um gegenüber einer begrenzenden Laibung abzudichten.

Weitere Anforderungen an Dichtungsvorrichtungen in Hauseinführungen sind z.B. eine einfache Montage, eine flexible Verwendung verschiedener Leitungsdurchmesser und Austauschbarkeit von Leitungen im Fall eines Defekts. Zunehmend werden auch dickere Kabelquerschnitte, insbesondere für Strom- und Datenleitungen nachgefragt. Dies betrifft z.B. Haushalte oder Bürogebäude aufgrund eines steigenden Energie- und/oder Datenübertragungsbedarfes, und insbesondere auch Bauwerke der Energieinfrastruktur, etwa Umspannwerke, welche vor dem Hintergrund der Energiewende größere Strommengen von stromerzeugenden Regionen (z.B. windstarke Regionen) in stromabnehmende Regionen übermitteln. Eine besondere Herausforderung beim Einsatz dickerer Leitungsquerschnitte ist, dass höhere mechanische Lasten auf die Bauwerkseinführung, insbesondere auf die Dichtpackungen wirken. Derartige höhere Lasten sind z.B. Drücke von bis zu 5 bar, vorzugsweise bis zu 4 bar, besonders bevorzugt bis zu 3 bar, ferner bevorzugt bis zu 2 bar und/oder Radialkräfte oberhalb von 2000 Newton, vorzugsweise 1800 Newton, besonders bevorzugt 1500 Newton. Diese Kräfte entstehen unter anderem durch Erdbewegungen, durch die sehr steifen Kabel, bzw. Leitungen selbst und/oder durch zusätzliches Biegen der Kabel / Leitungen bei der Montage.

Die Bauwerkseinführung, insbesondere Dichtpackung, muss dennoch zuverlässig abdichten, um Wasserschäden zu vermeiden.

Aufgabe der vorliegenden Erfindung ist es daher, eine Dichtungsvorrichtung bereitzustellen, die höhere Lasten aufnehmen und in das Mauerwerk eines Bauwerks einleiten kann. Die Aufgabe wird durch eine Dichtungsvorrichtung mit den Merkmalen des unabhängigen Anspruchs 1 gelöst.

Das Abtragen mechanischer Lasten, z.B. von Axialkräften oder Biegemomenten, durch die Dichtungsvorrichtung erfolgt zum einen an den Spannplatten und dem Fixierelement, und zum anderen an den Dichtkörpern. Vorzugsweise sind die Spannplatten und das Fixierelement starr ausgebildet, z.B. aus einer Stahllegierung, insbesondere aus Edelstahl, während die Dichtkörper ausgebildet sind, z.B. aus einem Kunststoff, einem Duroplast, einem faserverstärktem Kunststoff, bevorzugt aus einem Elastomermaterial, insbesondere aus EPDM. Von den Dichtkörpern werden die einzuführenden Leitungen umschlossen. Mithilfe des wenigstens einen Spannelements werden der erste Dichtkörper und/oder der zweite Dichtkörper verpresst, d.h. es wird eine Kraft auf den ersten Dichtkörper und/oder den zweiten Dichtkörper ausgeübt, die diese vorzugsweise axial komprimiert. Material des ersten und/oder zweiten Dichtkörpers wird radial nach außen an eine Stutzen-Laibung des Aufnahmestutzens gedrückt und füllt einen zuvor vorhandenen Zwischenraum oder Spalt zwischen Dichtkörper und Stutzen-Laibung fluiddicht aus. Ferner wird Material an eine Leitungs-Laibung, d.h. an die äußere Hülle der einzuführenden Leitung gedrückt. Zwischen der Leitungs-Laibung und dem Dichtkörper wird dadurch gleichermaßen eine fluiddichte Abdichtung erreicht.

Vorzugsweise ist ein Dichtkörper aus mehreren Teilen zusammengesetzt. Es ist bevorzugt, dass der Dichtkörper schalenartig aus Schalen unterschiedlicher Schalendurchmesser aufgebaut ist, sodass nach Auswahl einer passenden Schale und Entfernen aller inneren Schalen, ein enges Anliegen des Dichtkörpers an die einzuführende Leitung gewährleistet ist; das sog. Zwiebelschalenprinzip. Bevorzugt weist ein Dichtkörper mehrere Stellen auf, an denen eine Leitung positioniert werden kann und bevorzugt ist jede Stelle durch einen schalenartigen Aufbau an die jeweilige Leitungsgeometrie der einzuführenden und abzudichtenden Leitung anpassbar.

Ein Fixierelement ist ein Element, das dazu ausgebildet ist, die Dichtungsvorrichtung örtlich zu fixieren. Vorzugsweise wird dies durch einen Ring mit radial nach außen weisenden Streben realisiert. Gleichermaßen bevorzugt kann das Fixierelement durch radiale nach außen weisende Fortsätze am Dichtkörper realisiert sein. Besonders bevorzugt ist das Fixierelement eine Fixierplatte mit nach außen weisenden radialen Vorsprüngen. Das Fixierelement bzw. die Fixierplatte ist vorzugsweise zwischen dem ersten Dichtkörper und dem zweiten Dichtkörper angeordnet.

Ein Spannelement ist beispielsweise und bevorzugt eine Schraube-Mutter Paarung, wobei eine Schraube, eine Gewindestange, oder ein Spannbolzen mit Gewinde die erste Spannplatte, die zweite Spannplatte, ggf. die Fixierplatte bzw. Fixierelement, den ersten Dichtkörper und den zweiten Dichtkörper durchdringt und nach dem Durchdringen von einer Mutter aufgenommen wird. Durch Anziehen der Mutter gegenüber einem Gewinde der Schraube ist die Dichtungsvorrichtung verpressbar. Vorzugsweise sind mehrere Spannelemente in verschiedenen Positionen vorgesehen, sodass vorteilhafterweise ein gleichmäßigeres Verpressen der Dichtungsvorrichtung erfolgt. Besonders bevorzugt sind Spannelemente jeweils an einem axialen Ende des Spannelements an eine Fläche der Spannplatten angeschweißt und durchdringen die Spannplatte, die Dichtkörper und ggf. die Fixierplatte.

Der Erfindung liegt die Erkenntnis zugrunde, dass es besonders vorteilhaft ist, Lasten, insbesondere in einer mittigen Position, mithilfe eines Krafteinleitelements in einen Aufnahmestutzen einzuleiten. Denn so werden Lasten, insbesondere Biegemomente, zunächst von einem ersten, umgebungsseitigen Dichtkörper in die Stutzen-Laibung des Aufnahme Stutzens einer Bauwerkseinführung, beispielsweise einer Dichtpackung abgeleitet. Dies entlastet das an dem Fixierelement angebrachte Krafteinleitelement, welches insbesondere gegen ein axiales Verschieben der Dichtungsvorrichtung sichert. Das mittlere Krafteinleitelement ist außerdem dazu ausgebildet, Biegemomente, die auf den umgebungsseitigen Dichtkörper wirken, aufzunehmen. Der zweite, bauwerksseitige Dichtkörper muss dadurch vorteilhafterweise keine bzw. weniger Lasten aufnehmen. Er wird entlastet. Es besteht eine geringere Gefahr einer Deplatzierung und/oder eines Funktionsverlusts der Dichtungsvorrichtung, insbesondere des gebäudeseitigen, zweiten Dichtkörpers.

Ein Krafteinleitelement ist ein Element, das dazu ausgebildet ist Lasten, d. h. auf die Leitung bzw. die Dichtungsvorrichtung wirkende Kräfte und/oder Momente, in den Aufnahmestutzen einzuleiten. An einer Schnittstelle zwischen Krafteinleitelement und Aufnahmestutzen wirken Lagerkräfte und/oder Lagermomente, die von außen an die Dichtungsvorrichtung bzw. Leitung angreifenden Lasten entgegenwirken. Ein derartiges Krafteinleitelement ist beispielsweise bevorzugt ein Anschlagelement, ein Gewinde, eine stoffschlüssige Verbindung, z.B. eine Klebeverbindung, oder dergleichen.

Die Leitung, bzw. die Dichtungsvorrichtung kann beispielsweise Lasten ausgesetzt sein, indem etwa durch Bewegungen innerhalb des Erdreichs, z.B. Absetzbewegungen, Wasserdrainagen, Bewegungen von Tieren oder angrenzende Bau- oder Aushubarbeiten axiale Kräfte, Biegekräfte oder Torsionskräfte auf die Leitung bzw. die Dichtungsvorrichtung ausgeübt werden. Es kann aber auch sein, dass Lasten nicht primär erdreichseitig hervorgerufen werden, sondern gebäudeseitig, etwa durch die Montage der Leitungen und/oder nachfolgender Verteilerelemente. In analoger Weise dichtet eine erfindungsgemäße Vorrichtung auch in einem solchen Fall zuverlässig gegen ein Eindringen von Luft und/oder Wasser ab.

Bevorzugt erstreckt sich wenigstens ein Krafteinleitelement von dem Fixierelement radial nach außen. Besonders bevorzugt ist das wenigstens eine Krafteinleitelement dazu ausgebildet, von entsprechende Aussparungen und/oder Aufnahmestellen des Aufnahmestutzens aufgenommen zu werden.

Ferner ist es bevorzugt, dass das Fixierelement dazu ausgebildet ist, in einem eingesetzten Zustand mit dem Aufnahmestutzen der Bauwerkseinführung eine lösbare Verbindung einzunehmen. Beispielsweise und bevorzugt kann dies über eine Schraubverbindung, einen Sicherungsring, eine Keilverbindung oder dergleichen realisiert sein. Vorteilhafterweise muss bei der lösbaren Verbindung im Falle einer defekten Dichtungsvorrichtung lediglich die Dichtungsvorrichtung oder Komponenten der Dichtungsvorrichtung, nicht jedoch der Aufnahmestutzen getauscht werden. Außerdem ist während der Montage eine Positionskorrektur möglich.

Besonders bevorzugt ist das Krafteinleitelement dazu ausgebildet, in einem eingesetzten Zustand mit dem Aufnahmestutzen der Bauwerkseinführung, insbesondere Dichtpackung, einen Formschluss zu bilden.

Es ist bevorzugt und optional, dass das Krafteinleitelement dazu ausgebildet ist, sowohl Axialkräfte in einer axialen Richtung, als auch entgegengesetzt zur axialen Richtung aufnehmen zu können. Vorteilhafterweise ist die Dichtungsvorrichtung dann durch das Krafteinleitelement derart fixiert, dass von einer gebäudeabgewandten Seite oder von einer gebäudeseitigen Seite Druck- oder Zugkräfte auf die Leitung bzw. die Dichtungsvorrichtung wirken können, ohne dass diese wesentlich bewegt wird. Insbesondere bleibt vorteilhafterweise die Dichtfunktion erhalten.

In einer bevorzugten Ausführungsform ist das Fixierelement dazu ausgebildet, gegen Biegemomente um Biegeachsen abzustützen, die im Wesentlichen orthogonal zur axialen Richtung sind.

Besonders bevorzugt ist das Krafteinleitelement bajonettartig mit dem Aufnahmestutzen der Bauwerkseinführung, insbesondere der Dichtpackung, koppelbar und lösbar. Die Dichtungsvorrichtung ist dann so ausgestaltet, dass sie zunächst im Wesentlichen axial in den Aufnahmestutzen einführbar ist und dann an einer entsprechenden, gegenförmig ausgebildeten Aufnahmestelle des Aufnahmestutzens um die axiale Richtung so rotiert wird, dass ein axiales Verschieben des Krafteinleitelements nach der Rotationsbewegung blockiert wird.

Bevorzugt liegt das Verhältnis einer axialen Erstreckung des ersten Dichtkörpers im nicht verpressten Zustand zu einer axialen Erstreckung des zweiten Dichtkörpers im nicht verpressten Zustand in einem Bereich von 0,5 bis 1,5, vorzugsweise von 0,6 bis 1,4, besonders bevorzugt von 0,7 bis 1,3, insbesondere bevorzugt von 0,8 bis 1,2. Vorteilhafterweise ist dann ein Dichtkörper nicht wesentlich größer bzw. kleiner als der andere Dichtkörper. So ist sichergestellt, dass ein Dichtkörper (z.B. der erste Dichtkörper) und das Fixierelement den anderen Dichtkörper (z.B. den zweiten Dichtkörper) ausreichend mechanisch abstützen und die Dichtfunktion des anderen Dichtkörpers (z.B. des zweiten Dichtkörpers) ausreichend erhalten bleibt.

Ferner bevorzugt ist eine Dichtungsvorrichtung, bei welcher die erste Spannplatte einen ersten Radius aufweist, die zweite Spannplatte einen zweiten Radius aufweist und wobei die Fixierplatte einen ersten mittleren Radius und einen zweiten mittleren Radius aufweist, wobei der erste mittlere Radius der Radius ist, der sich vom Mittelpunkt der Fixierplatte zum Fuß des Krafteinleitelements erstreckt, und der zweite mittlere Radius derjenige Radius ist, der sich vom Mittelpunkt der Fixierplatte bis zu einem Kopf des Krafteinleitelements erstreckt, wobei der erste Radius größer oder gleich dem zweiten mittleren Radius ist, der zweite mittlere Radius größer als der erste mittlere Radius ist und der zweite Radius größer oder gleich dem ersten mittleren Radius ist. Besonders bevorzugt weist der Aufnahmestutzen dazu korrespondierend geformte Abstufungen auf, die dazu ausgebildet sind den ersten Dichtkörper, den zweiten Dichtkörper, die erste Spannplatte, die zweite Spannplatte und die Fixierplatte aufzunehmen. Vorteilhafterweise können an den Abstufungen zusätzlich Axialkräfte aufgenommen werden. Außerdem ist durch die Abstufungen vorteilhafterweise eine Einführrichtung bei der Montage vorgegeben.

Außerdem ist es bevorzugt, dass der erste Dichtkörper zwischen der ersten Spannplatte und dem Fixierelement angeordnet ist und einen ersten maximalen Dichtradius aufweist, der zweite Dichtkörper zwischen dem Fixierelement und der zweiten Spannplatte angeordnet ist und einen zweiten maximalen Dichtradius aufweist, wobei der erste maximale Dichtradius größer ist als der zweite maximale Dichtradius. In diese bevorzugten Ausführungsform kann der erste Dichtkörper aufgrund des höheren axialen Flächenträgheitsmoments höhere Biegebelastungen aufnehmen und aufgrund der höheren Kontaktfläche zur Stutzen-Laibung besser in den Aufnahmestutzen einleiten. Der zweite Dichtkörper wird somit besonders vorteilhaft mechanisch entlastet.

Es ist bevorzugt, dass das Verhältnis des ersten maximalen Dichtradius im nicht verpressten Zustand zum zweiten maximalen Dichtradius im nicht verpressten Zustand kleiner als 1,4, vorzugsweise 1,3, besonders bevorzugt 1,2, insbesondere bevorzugt 1,1, speziell bevorzugt 1,08 ist. Bevorzugt können dann die gleichen Spannelemente dazu verwendet werden, sowohl den ersten, als auch den zweiten Dichtkörper zu verspannen. Für zu große Durchmesserunterschiede eines Dichtkörpers im Vergleich zum anderen Dichtkörper kann das Verwenden der gleichen Spannelemente dazu führen, dass ein Dichtkörper deutlich stärker verpresst wird als der andere Dichtkörper. Das kann zu einer mangelnden Dichtwirkung (zu niedrige Verpressung) oder zur Beschädigung des Dichtmaterials (zu hohe Verpressung) führen, sodass es vorteilhaft ist, das Verhältnis des ersten maximalen Dichtradius im nicht verpressten Zustand zum zweiten maximalen Dichtradius im nicht verpressten Zustand innerhalb des genannten Bereichs auszulegen.

Ferner ist bevorzugt, dass der erste und/oder der zweite Dichtkörper einen Absatz aufweist, sodass der erste Dichtkörper einen zusätzlichen Abschnitt mit einem ersten minimalen Dichtradius, der kleiner als der erste maximale Dichtradius ist und/oder sodass der zweite Dichtköper einen zusätzlichen Abschnitt mit einem zweiten minimalen Dichtradius, der kleiner als der zweite maximale Dichtradius ist, aufweist. Vorteilhafterweise können an einem solchen Absatz, wenn dieser an einem dazu korrespondierend gebildeten Absatz des Aufnahmestutzens anliegt, zusätzlich Axialkräfte in den Aufnahmestutzen eingeleitet werden. Besonders bevorzugt ist an einem Absatz eine Fase vorgesehen, sodass das Positionieren und das Einführen der Dichtungsvorrichtung während der Montage erleichtert wird.

In einer bevorzugten Ausführungsform umfasst die Dichtungsvorrichtung ferner wenigstens einen zusätzlichen Versteifungsdichtkörper und/oder wenigstens eine zusätzliche mittlere Krafteinleitungsplatte, wobei Elemente aus einer ersten Gruppe, umfassend die erste Spannplatte, die zweite Spannplatte, die Fixierplatte und die wenigstens eine mittlere Krafteinleitungsplatte im Wechsel mit Elementen aus einer zweiten Gruppe, umfassend den ersten Dichtkörper, den zweiten Dichtkörper und den wenigstens einen zusätzlichen Versteifungsdichtkörper angeordnet sind. Der zusätzliche Versteifungsdichtkörper ist vorzugsweise ebenfalls aus einem Elastomermaterial, z.B. EPDM ausgebildet und wird vorzugsweise ebenfalls verpresst. Für den Fall des Versagens eines der anderen Dichtkörper ist durch den Versteifungsdichtkörper ein zusätzlicher Abdichtkörper vorhanden, um Eindringen von Wasser oder anderen Fluiden zu verhindern. Die zusätzliche mittlere Krafteinleitungsplatte ist vorzugsweise aus einer Stahllegierung gebildet. Durch das abwechselnde Verwenden eines Elements aus der ersten Gruppe und der zweiten Gruppe wird vorteilhafterweise sichergestellt, dass mehrere kurze Abschnitte mit jeweils einem Element der zweiten Gruppe anstatt eines längeren Abschnitts mit einem Element der zweiten Gruppe vorgesehen sind. Vorteilhafterweise biegen sich die Elemente der zweiten Gruppe weniger stark durch und es kommt nicht zu einem Deplatzieren eines Elements. Die Dichtungsvorrichtung ist vorteilhafterweise robuster und das Entstehen eines Spalts oder einer Lücke, durch die Wasser oder ein anderes Fluid eindringen kann, wird verhindert.

Besonders bevorzugt weist jede mittlere Krafteinleitungsplatte ein Krafteinleitelement auf, das dazu ausgebildet ist, mechanische Lasten in den Aufnahmestutzen der Bauwerkseinführung einzuleiten. Bevorzugt sind dazu im Aufnahmestutzen mehrere Aufnahmeelemente vorgesehen, die jeweils ein Krafteinleitelement aufnehmen. Vorteilhafterweise werden die aufzunehmenden Lasten auf eine Mehrzahl von Krafteinleitelementen aufgeteilt.

In einem weiteren Aspekt der Erfindung wird die zugrunde liegende Aufgabe gelöst durch ein Dichtsystem aufweisend einen Aufnahmestutzen einer Bauwerkseinführung, insbesondere einer Dichtpackung eines Bauwerks und eine Dichtungsvorrichtung nach einer der vorstehend beschriebenen bevorzugten Ausführungsformen einer Dichtungsvorrichtung gemäß dem ersten Aspekt der Erfindung, wobei der Aufnahmestutzen wenigstens ein Aufnahmeelement aufweist, das dazu ausgebildet ist, mit dem wenigstens einen Krafteinleitelement der Dichtungsvorrichtung in Eingriff zu kommen. Der Aufnahmestutzen ist ein Gegenstück der Dichtungsvorrichtung und vorzugsweise so ausgebildet, dass die Dichtungsvorrichtung in einem nicht verpressten Zustand werkzeugfrei eingeführt werden kann. Vorzugsweise nimmt das wenigstens eine Aufnahmeelement die Dichtungsvorrichtung so auf, dass ein axiales Verschieben der Dichtungsvorrichtung relativ zum Aufnahmestutzen blockiert wird. Vorzugsweise sind das wenigstens eine Aufnahmeelement des Aufnahmestutzens und das wenigstens eine Krafteinleitelement dazu ausgebildet, lösbar, vorzugsweise bajonettartig verbunden und gelöst werden zu können.

In einem dritten Aspekt der Erfindung wird die zugrunde liegende Aufgabe gelöst durch die Verwendung eines Dichtsystems zum Einbau in ein Wand-oder Bodenelement eines Bauwerks, wobei fließfähiges Material, vorzugsweise Beton oder Mörtel, welches dann erstarrt, das Dichtsystem umschließt.

Ein vierter Aspekt der Erfindung betrifft Verfahren zum Einbau wenigstens einer Leitungsführung in ein Bauwerk, wobei zwei unterschiedliche Verfahrensweisen existieren, in Abhängigkeit von dem Verlegen bzw. Durchführen der Leitungen, Kabel und/oder Rohre durch die Mauerwerksdurchführung.

Im ersten Fall liegt ein Verfahren vor, bei welchem die Leitungen, Kabel und/oder Rohre vor dem Verbau der Dichtungsvorrichtung durch die Mauerwerksdurchführung geführt werden. Dieses Verfahren umfasst die Schritte: Positionieren eines Aufnahmestutzen an einer geplanten Wandposition; Umgießen des Aufnahmestutzen mit einem fließfähigen, dann erstarrenden Material, vorzugsweise Beton oder Mörtel; Einführen wenigstens einer Leitung durch den Aufnahmestutzen; Umschließen der wenigstens einen Leitung mit einer erfindungsgemäßen Dichtungsvorrichtung; Axiales Verschieben der Dichtungsvorrichtung entlang der wenigstens einen Leitung in den Aufnahmestutzen; Rotation der Dichtungsvorrichtung relativ zum Aufnahmestutzen zum Schließen einer Verbindung zwischen Aufnahmestutzen und Dichtungsvorrichtung; und Verpressen von Dichtkörpern zum Abdichten der Leitung durch Spannen von Spannelementen.

Im zweiten Fall liegt ein Verfahren vor, bei welchem die durchzuführenden Leitungen, Kabel und/oder Rohre erst zum Schluss durch die Bauwerkseinführung mit der darin eingesetzten Dichtungsvorrichtung geführt werden. Es umfasst die Schritte: Positionieren eines Aufnahmestutzen an einer geplanten Wandposition; Umgießen des Aufnahmestutzen mit einem fließfähigen, dann erstarrenden Material, vorzugsweise Beton oder Mörtel; Einsetzen einer erfindungsgemäßen Dichtungsvorrichtung; Axiales Verschieben der Dichtungsvorrichtung in den Aufnahmestutzen; Rotation der Dichtungsvorrichtung relativ zum Aufnahmestutzen zum Schließen einer Verbindung zwischen Aufnahmestutzen und Dichtungsvorrichtung; Einführen wenigstens einer Leitung durch die erfindungsgemäße Dichtungsvorrichtung im Aufnahmestutzen; und Verpressen von Dichtkörpern zum Abdichten der Leitung durch Spannen von Spannelementen.

Es soll verstanden werden, dass die Dichtungsvorrichtung gemäß dem ersten Aspekt der Erfindung, das Dichtsystem gemäß dem zweiten Aspekt der Erfindung, die Verwendung gemäß dem dritten Aspekt der Erfindung und die Verfahren gemäß dem vierten Aspekt der Erfindung gleiche und ähnliche Unteraspekte aufweisen, wie sie insbesondere in den abhängigen Ansprüchen niedergelegt sind. Insofern wird für Weiterbildungen des zweiten, dritten und vierten Aspekts der Erfindung vollumfänglich auf die Weiterbildungen des ersten Aspekts der Erfindung verwiesen.

Nachfolgend wird die Erfindung anhand von Ausführungsbeispielen unter Bezugnahme auf die beiliegenden Figuren näher erläutert. Dabei zeigen in:
- Figur 1:: eine isometrische Ansicht einer ersten Ausführungsform einer erfindungsgemäßen Dichtungsvorrichtung;
- Figur 2:: eine seitliche Ansicht einer Weiterentwicklung der ersten Ausführungsform einer erfindungsgemäßen Dichtungsvorrichtung;
- Figur 3a: eine Dichtungsvorrichtung vor dem Verbinden mit einem Aufnahmestutzen;
- Figur 3b:: ein in einem Mauerwerk angeordnetes Dichtsystem;
- Figur 3c:: eine Draufsicht auf ein Dichtsystem in einem Mauerwerk;
- Figur 4:: eine Draufsicht auf eine erste Spannplatte einer erfindungsgemäßen Dichtungsvorrichtung;
- Figur 5a:: eine perspektivische Ansicht einer zweiten Ausführungsform einer erfindungsgemäßen Dichtungsvorrichtung;
- Figur 5b:: eine Seitansicht der zweiten Ausführungsform einer erfindungsgemäßen Dichtungsvorrichtung;
- Figur 5c:: eine Draufsicht auf die zweite Ausführungsform einer erfindungsgemäßen Dichtungsvorrichtung;
- Figur 6a:: eine perspektivische Ansicht einer dritten Ausführungsform einer erfindungsgemäßen Dichtungsvorrichtung;
- Figur 6b:: eine Seitansicht der dritten Ausführungsform einer erfindungsgemäßen Dichtungsvorrichtung;
- Figur 6c:: eine Draufsicht auf die dritte Ausführungsform einer erfindungsgemäßen Dichtungsvorrichtung;
- Figur 7a:: eine erste Schrittabfolge zum Durchführen eines erfindungsgemäßen Verfahrens; und in
- Figur 7b: eine zweite Schrittabfolge zum Durchführen eines erfindungsgemäßen Verfahrens.

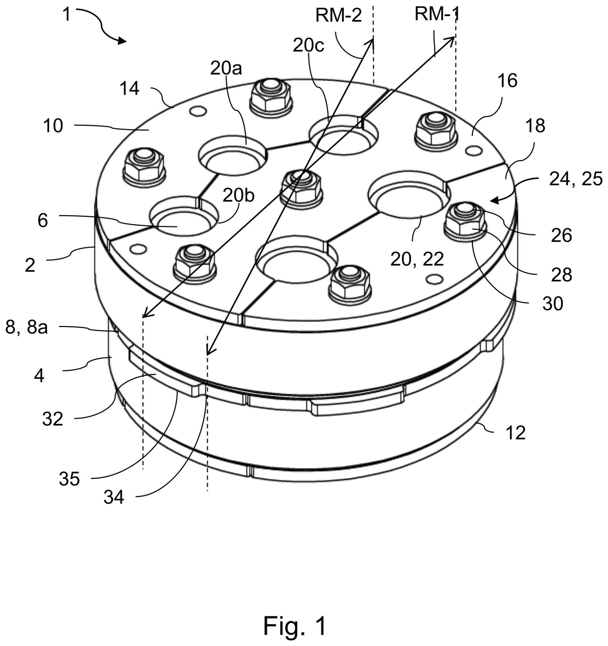

Figur 1 zeigt eine erste Ausführungsform einer erfindungsgemäßen Dichtungsvorrichtung 1. Die Dichtungsvorrichtung 1 weist einen ersten Dichtkörper 2 und einen zweiten Dichtkörper 4 auf. Der erste Dichtkörper 2 und der zweite Dichtkörper 4 weisen eine im Wesentlichen zylinderförmige Geometrie auf. Die beiden Dichtkörper 2, 4 werden von insgesamt fünf Öffnungen 6 durchdrungen. Die Öffnungen 6 sind dazu ausgebildet, abzudichtende Leitungen aufzunehmen und fluiddicht abzudichten. In dem hier gezeigten Ausführungsbeispiel sind die Öffnungen 6 dazu ausgebildet, ein Stromkabel, ein TV-Kabel, ein Glasfaserkabel, ein Telefonkabel und ein zusätzliches Starkstromkabel aufzunehmen und abzudichten.

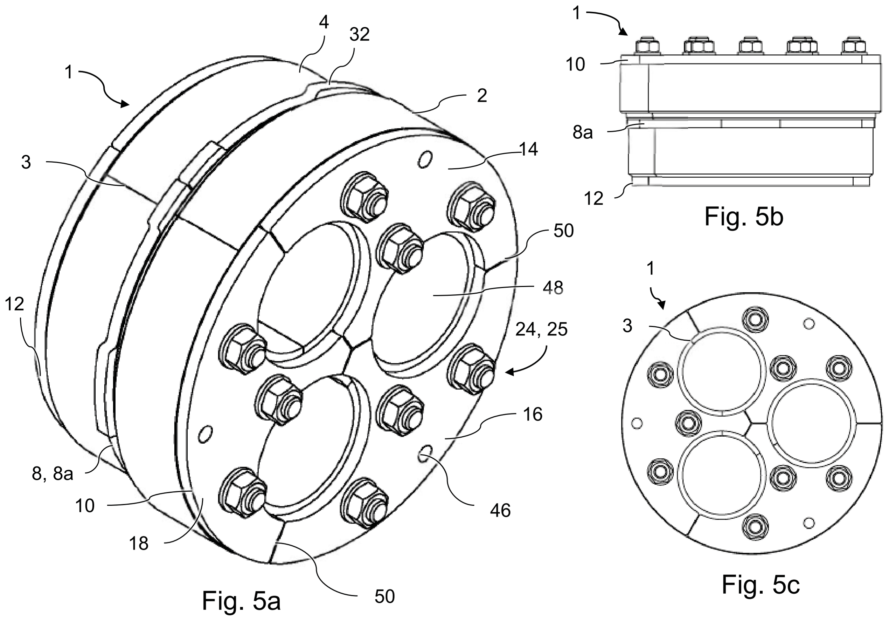

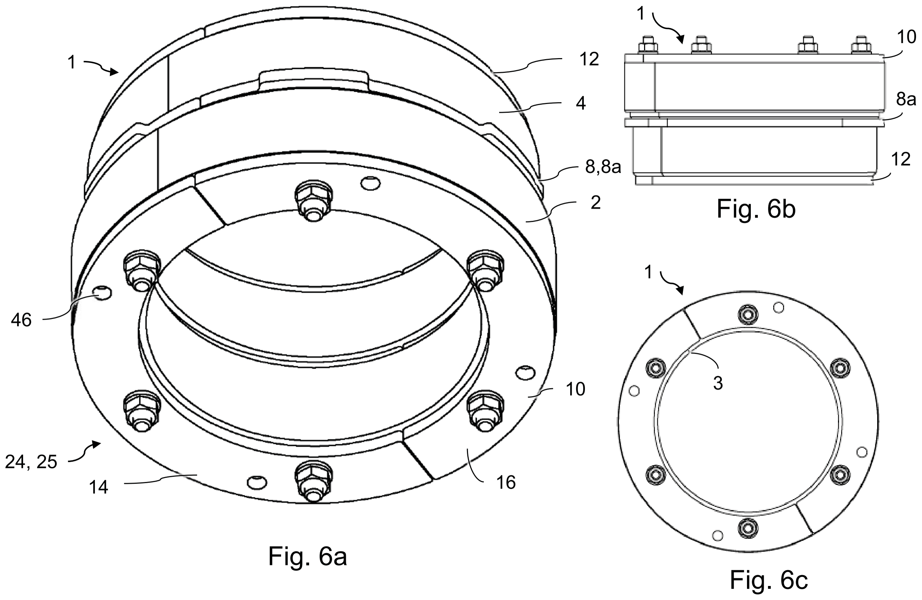

Es soll jedoch verstanden werden, dass auch andere Kombinationen von Kabeln bzw. Leitungen vorgesehen sein können. Es kann auch vorgesehen sein, dass die Dichtungsvorrichtung 1 weniger als fünf Leitungen aufnimmt und abdichtet. Verbleibende, nicht belegte Öffnungen 6 können dann z.B. mit Blindstopfen belegt werden und erst für eine spätere Installation zusätzlicher Kabel bzw. Leitungen verwendet werden. In anderen Ausführungsformen können auch mehr oder weniger als fünf Öffnungen 6 vorgesehen sein, siehe hierzu etwa Figur 5 und Figur 6.

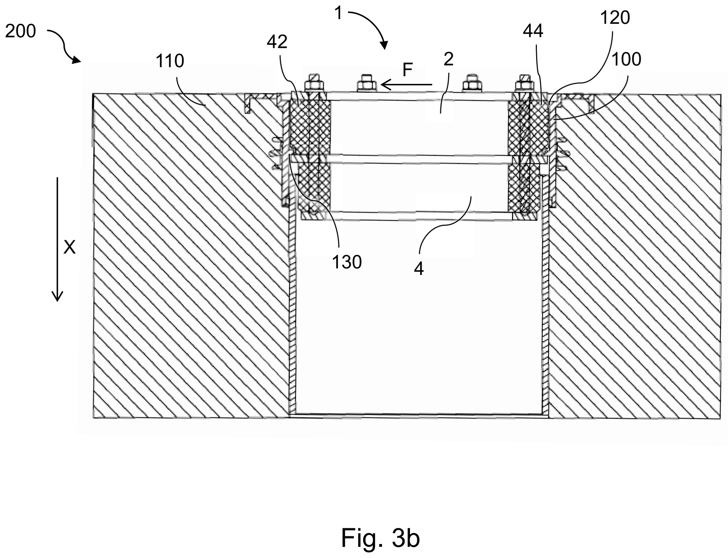

Sowohl der erste Dichtkörper 2, als auch der zweite Dichtkörper 4 sind in dem hier gezeigten Ausführungsbeispiel aus einem elastischen EPDM-Material ausgebildet. Vorteilhafterweise ist dieses Material elastisch verformbar. Bevorzugt ist es dazu ausgebildet, sich bei einer axialen Kompression des Materials radial auszudehnen. Im Betrieb wirkt die Dichtungsvorrichtung 1 mit einem die Dichtungsvorrichtung 1 radial umgebenden, und in ein Mauerwerk 110 eingelassenen Aufnahmestutzen 100 bspw. einer Dichtpackung 90 zusammen (siehe auch Fig. 3b). Eine Stutzen-Laibung 120 des Aufnahmestutzen 100 bspw. einer Dichtpackung 90 begrenzt das radiale Ausdehnungsbestreben der Dichtungsvorrichtung 1 in radialer Richtung. Etwaige vorhandene Zwischenräume, Luftspalte oder dergleichen zwischen der Stutzen-Laibung 120 des Aufnahmestutzens 100 und der Dichtungsvorrichtung 1 werden durch das EPDM-Material der Dichtkörper 2, 4 ausgefüllt, sodass eine fluiddichte Abdichtung zwischen Dichtungsvorrichtung 1 und dem Aufnahmestutzen 100 gewährleistet ist. In anderen Ausführungsformen können die Dichtkörper 2, 4 auch aus einem anderen Dichtmaterial bestehen. Vorzugsweise bestehen die Dichtkörper 2, 4 aus einem Kunststoff, besonders bevorzugt aus einem Elastomermaterial.

Um die abzudichtende Leitung in die Dichtkörper 2, 4 einzuführen, können diese vorzugsweise mit einem Schlitz 3 versehen sein (vgl. etwa die Ausführungsform gemäß Figur 6a). Aufgrund der Elastizität des Dichtmaterials lässt sich eine Öffnung an den Dichtkörpern so aufweiten, dass eine Leitung eingelegt werden kann. Bevorzugt, insbesondere für Dichtungsvorrichtungen mit mehreren aufzunehmenden Leitungen sind mehrere derartige Schlitze 3 vorgesehen, sodass die Dichtkörper 2,4, jeweils in mehrere Teile getrennt werden können, um abzudichtende Leitungen in den Öffnungen zu platzieren. Dann werden die einzelnen Teile eines Dichtkörpers wieder zusammengesetzt und vorzugsweise fixiert, etwa durch die Schraubbolzen 26.

Der erste Dichtkörper 2 und der zweite Dichtkörper 4 werden durch ein Fixierelement 8 voneinander getrennt, das hier als Fixierplatte 8a ausgebildet ist. An der anderen Seite des ersten Dichtkörpers 2 ist der Dichtkörper 2 in Flächenkontakt mit der ersten Spannplatte 10. Der zweite Dichtkörper ist an der dem ersten Dichtkörper abgewandten Seite in Kontakt mit der zweiten Spannplatte 12. Die erste Spannplatte 10, die zweite Spannplatte 12 und die Fixierplatte 8a sind jeweils aus mehreren Teilen - einem ersten Teil 14, einem zweiten Teil 16 und einem dritten Teil 18 - nämlich dreiteilig, ausgeführt. An den Grenzen der Teile 14, 16, 18 sind kreisförmige Aussparungen 20 vorgesehen. In einem zusammengesetzten Zustand einer Spannplatte und in Figur 1 besonders gut zu erkennen für die erste Spannplatte 10, formen die kreisförmigen Aussparungen 20 runde Löcher 22 zur Aufnahme von Leitungen oder Rohren. Es ist ersichtlich, dass die runden Löcher 22 im Wesentlichen koaxial zu den Öffnungen 6 der Dichtkörper 2, 4 angeordnet sind. Dichtkörper 2, 4 und Spann- bzw. Fixierplatten 8a, 10, 12 sind demnach dazu ausgebildet, Leitungen derart aufzunehmen, dass die Leitungen durch die erste Spannplatte 10, den ersten Dichtkörper 2, die Fixierplatte 8a, den zweiten Dichtkörper 4 und die zweite Spannplatte 12 hindurch verlaufen. Bevorzugt verlaufen die Leitungen axial zu einer axialen Richtung X der Dichtungsvorrichtung 1.

Die erste Spannplatte 10, die zweite Spannplatte 12, und die Fixierplatte 8a sind in dem hier gezeigten Ausführungsbeispiel vorzugsweise aus Edelstahl ausgeführt und weisen vorzugsweise eine Dicke, d. h. eine axiale Erstreckung, von jeweils ca. 5 mm auf. In anderen Ausführungsformen können die Spannplatten 10, 12 dicker oder dünner sein, Profilierungen aufweisen und/oder aus einem anderen Material, vorzugsweise aus einem starren Material, vorzugsweise einer Stahllegierung oder einem Kunststoff, z.B. einem Duroplast und/oder einem faserverstärkten Kunststoff ausgebildet sein. Die beschriebenen Spann- bzw. Fixierplatten 8a, 10, 12 können in anderen Ausführungsformen auch unterschiedliche Dicken und/oder Profilierungen aufweisen und/oder aus unterschiedlichen Materialien bestehen. Besonders bevorzugt sind sie aus korrosionsbeständigen Materialien hergestellt, welche besonders bevorzugt beständig gegenüber Medien und Stoffen sind, die am Außenbereich eines Bauwerks auftreten.

Es sind Spannelemente 24 vorgesehen, die in dem in Figur 1 gezeigten Ausführungsbeispiel jeweils aus einer Mutter-Schraubbolzen-Paarung 25 eines Schraubbolzens 26 und einer Mutter 28 bestehen. Zusätzlich ist je eine Unterlegscheibe 30 jeweils zwischen der Mutter 28 und der ersten Spannplatte 10 vorgesehen. Im hier gezeigten Ausführungsbeispiel sind insgesamt sieben Mutter-Schraubbolzen-Paarungen 25 vorgesehen. Eine Mutter-Schraubbolzen-Paarung 25 ist mittig an einem Mittelpunkt der ersten Spannplatte 10 positioniert. Die verbleibenden sechs Mutter-Schraubbolzen-Paarungen 25 sind in regelmäßigen Abständen auf einem Kreis um den Mittelpunkt der zweiten Spannplatte 10 herum angeordnet. In dem ersten Teil 14 und in dem dritten Teil 18 der ersten Spannplatte 10 sind jeweils zwei Mutter-Schraubbolzen-Paarungen 25 positioniert. In dem mittleren, zweiten Teil 16 der ersten Spannplatte 10 sind drei Mutter-Schraubbolzen-Paarungen 25 positioniert. Vorteilhafterweise sind die Mutter-Schraubbolzen-Paarungen 25 gleichmäßig verteilt, sodass bei einem Anziehen der Mutter-Schraubbolzen-Paarungen 25 eine gleichmäßige Presskraft in den ersten Dichtkörper 2 bzw. in den zweiten Dichtkörper 4 eingeleitet wird. Bevorzugt sind die Muttern 28 selbsthemmend ausgeführt, um einem unerwünschtem Lösen im Betrieb vorzubeugen. Alternativ und/oder zusätzlich wird vorzugsweise ein Klebstoff am Gewinde der Mutter-Schraubbolzen-Paarung 25 eingesetzt. In der hier gezeigten Ausführungsform sind Schraubbolzen (nicht sichtbar) angrenzend an die zweite Spannplatte 12 angeschweißt, während an der ersten Spannplatte Muttern 28 angebracht sind. Es ist aber gleichermaßen bevorzugt, diese Anordnung zu invertieren oder eine Gewindestange zu verwenden, die an beiden Enden jeweils eine Mutter 28 aufweist. In einer weiteren bevorzugten Ausführungsform weist die erste Spannplatte 10, die zweite Spannplatte 12 und/oder die Fixierplatte 8a Gewindeelemente auf, sodass ein die Platten 8a, 10, 12 durchdringender Schraubbolzen 26 direkt in die entsprechenden Gewindeelemente greift. In alternativen Ausführungsformen ist es zudem bevorzugt, dass manche Spannelemente 24 dazu ausgebildet sind, den ersten Dichtkörper 2, nicht aber den zweiten Dichtkörper 4 zu verpressen und andere Spannelemente dazu ausgebildet sind, den zweiten Dichtkörper 4 und/oder den ersten Dichtkörper 2 zu verpressen. Dies ist bevorzugt, wenn etwa die Dichtkörper 2, 4 andere Materialien und/oder andere Geometrien aufweisen und mit unterschiedlichen Kräften beaufschlagt werden sollen, um gleichermaßen eine ausreichende Abdichtung, ein ausreichendes Einleiten von Lasten in den Aufnahmestutzen 100 und/oder eine Belastung der Dichtkörper 2, 4 gemäß ihren mechanischen Eigenschaften zu gewährleisten. In anderen Ausführungsformen ist anstelle oder zusätzlich zum Einsatz von Mutter-Schrauben-Paarungen 25 als Spannelement 24 der Einsatz anderer Spannelemente 24, z.B. Seile mit Steigklemmen, Spannhebel, Nieten oder dergleichen bevorzugt.

Der erste Teil 14, der zweite Teil 16, und der dritte Teil 18 der ersten Spannplatte 10 (und in analoger Weise der zweiten Spannplatte 12 und der Fixierplatte 8a) sind dazu ausgebildet, im zusammengesetzten Zustand eine annähernd runde Spannplatte bzw. Fixierplatte 8a zu formen. Im zusammengesetzten Zustand verlaufen die Grenzen des ersten Teils 14 zum zweiten Teil 16, bzw. des zweiten Teils 16 zum dritten Teil 18 durch die kreisförmigen Aussparungen 20 hindurch. Verbindungslinien von einer kreisförmigen Aussparungen 20a zu einer weiteren kreisförmigen Aussparungen 20b bzw. zu einer dritten Aussparung 20c oder zu einem radialen Rand der Spannplatte sind zueinander abgewinkelt, d. h. sie umschließen einen Winkel, der ungleich 180° ist. Vorteilhafterweise wird somit ein zusätzlicher Formschluss der Teile 14, 16, 18 zueinander realisiert. Einem Abscheren eines Teils (z.B. des ersten Teils 14) gegenüber einem anderen Teil (z.B. gegenüber dem zweiten Teil 16) durch entgegengesetzt angreifende Kräfte zumindest teilweise senkrecht zur axialen Richtung X wird vorgebeugt, weil der entsprechende Formschluss die Scherkräfte zumindest teilweise aufnehmen kann. Vorzugsweise werden derartige Scherkräfte somit nicht in die Leitung, bzw. das Kabel eingeleitet. Die Leitung, bzw. das Kabel wird vor mechanischer Belastung geschützt.

In der in Figur 1 abgebildeten Ausführungsform weisen die Löcher 22 in der ersten Spannplatte 10 einen größeren Durchmesser auf, als die Öffnungen 6 durch den ersten Dichtkörper 2. Vorteilhafterweise liegt die Leitung, bzw. das Kabel somit am ersten Dichtkörper 2, jedoch nicht an der ersten Spannplatte 10 an. Mögliche, leichte axiale Bewegungen des Kabels, bzw. der Leitung relativ zur Dichtungsvorrichtung 1 haben dann kein Reiben an der starren, womöglich scharfen Kante der ersten Spannplatte zur Folge. Dies schont vorteilhafterweise die Leitung, bzw. das Kabel. Dieser beschriebene Durchmesserunterschied ist ein optionales Merkmal, und in anderen erfindungsgemäßen Ausführungsformen nicht zwangsläufig vorhanden. Es können gleichermaßen bevorzugt Fasen oder Rundungen an den Löchern 22 einer oder mehrerer der Spannplatten 10, 12, und/oder der Fixierplatte 8a angebracht sein und/oder die Löcher 22 sind mit einer reibungsmindernden Materialbeschichtung versehen. Bevorzugt ist das Kabel bzw. die Leitung von einer robusten, mechanischem Verschleiß gegenüber beständigen Hülle umgeben, welche Reibbewegungen mechanisch standhält bzw. verschleißresistent ist.

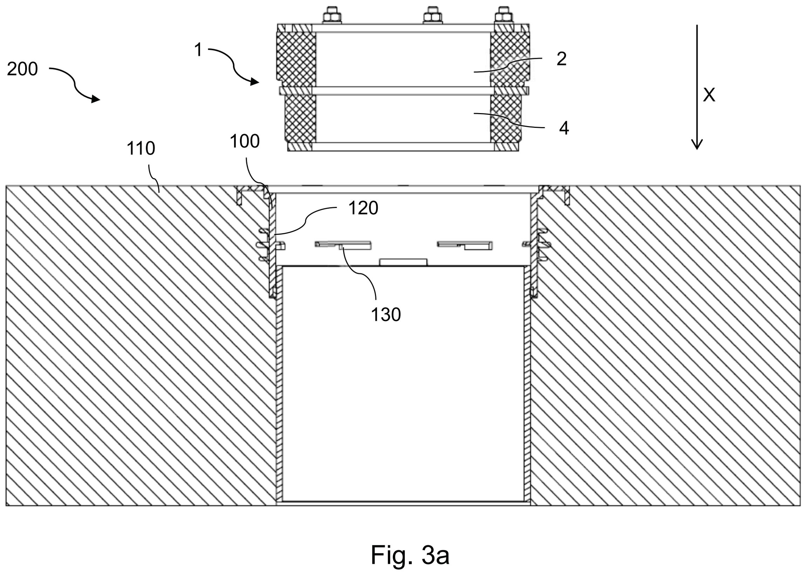

Von der Fixierplatte 8a erstrecken sich in radialer Richtung Krafteinleitelemente 32. Die Krafteinleitelemente 32 erstrecken sich von einem Außenumfang eines Kreises mit einem ersten mittleren Radius RM-1, der von einem Mittelpunkt der Fixierplatte 8a bis zu einem Fuß 34 des Krafteinleitelements 32 reicht bis zu einem zweiten Außenumfang eines zweiten Kreises mit einem zweiten mittleren Radius RM-2, der von einem Mittelpunkt der Fixierplatte 8a bis zu einem Kopf 35 der Krafteinleitelemente reicht. Die Dichtungsvorrichtung 1 ist dazu ausgebildet, entlang axialer Führungen für die Krafteinleitelemente 32 des Aufnahmestutzens 100, bspw. einer Dichtpackung 90, axial in den Aufnahmestutzen 100 eingeführt zu werden und durch Drehen eine formschlüssige, vorzugsweise lösbare Verbindung der Dichtungsvorrichtung 1 mit dem Aufnahmestutzen 100 einzugehen. Eine solche Steck-Drehverbindung, in der zunächst ein axiales Einführen der Dichtungsvorrichtung 1 in den Aufnahmestutzen 100 und dann ein rotatorisches Verdrehen der Dichtungsvorrichtung 1 gegenüber Aufnahmeelementen 130 des Aufnahmestutzens 100 erfolgt (siehe hierzu Figur 3a, 3b), ist auch als Bajonettverbindung bekannt.

Im eingesetzten Zustand sind die Krafteinleitelemente 32 dazu ausgebildet, axiale Kräfte, die auf die Dichtungsvorrichtung 1 wirken, in die Aufnahmeelemente 130 des Aufnahmestutzens 100 einzuleiten. An der Schnittstelle von Aufnahmeelementen 130 zu Krafteinleitelementen 32 werden somit den axialen Kräften entgegen gerichtete Lagerkräfte, die auch als Reaktionskräfte bezeichnet werden können, hervorgerufen. Ein axiales Bewegen der Dichtungsvorrichtung 1 wird blockiert. In analoger Weise werden auf die Dichtungsvorrichtung 1 wirkende Biegekräfte am Krafteinleitelement 32 durch entgegengesetzt wirkende Lagermomente, die auch als Reaktionsmomente bezeichnet werden können, kompensiert. Es soll verstanden werden, dass Reaktionskräfte und/ oder Reaktionsmomente nicht ausschließlich am Krafteinleitelement 32 hervorgerufen werden müssen. Vielmehr werden vorteilhafterweise und bevorzugt auch entlang des Umfangs des ersten Dichtkörpers 2 und/oder des zweiten Dichtkörpers 4 bei Kontakt mit der Stutzen-Laibung 120 Kräfte und Momente in den Aufnahmestutzen 100 eingeleitet. Zusätzlich oder alternativ können die erste Spannplatte 10 und/oder die zweite Spannplatte 12 dazu ausgebildet sein, axiale Kräfte und/oder durch Biegekräfte hervorgerufene Momente in den Aufnahmestutzen 100 einzuleiten. Bevorzugt und vorteilhafterweise ist die Fixierplatte 8a und insbesondere das Krafteinleitelement 32 starr ausgebildet und entlastet somit die elastisch ausgebildeten Dichtkörper 2, 4. Verformungen der Dichtkörper 2, 4, insbesondere des zweiten Dichtkörpers 4, beim Einleiten von Kräften und/oder Momenten in den Aufnahmestutzen 100 werden somit begrenzt. Vorteilhafterweise werden die Dichtkörper 2, 4, vorzugsweise der zweite Dichtkörper 4 somit entlastet. Das Risiko, aufgrund zu großer Verformung eines Dichtkörpers 2, 4 infolge der Aufnahme von Kräften und/oder Momenten eine ausreichende Dichtwirkung nicht mehr sicherzustellen, wird verringert.

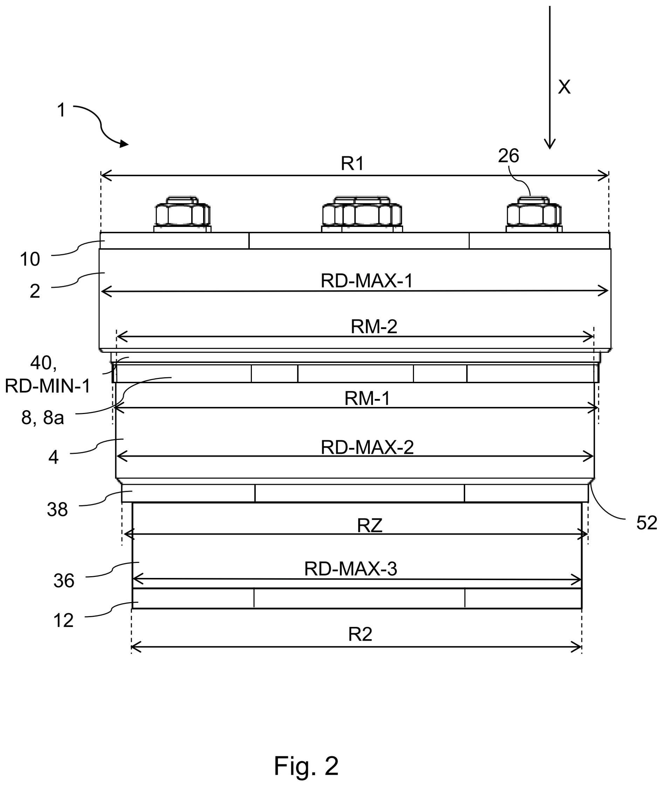

In Figur 2 ist eine Weiterentwicklung der Dichtungsvorrichtung 1 aus Figur 1 in seitlicher Ansicht abgebildet. Zusätzlich zu dem ersten Dichtkörper 2 und dem zweiten Dichtkörper 4 ist hier ein zusätzlicher Versteifungsdichtkörper 36, vorzugsweise aus einem Dichtmaterial, vorzugsweise einem Elastomer, vorzugsweise EPDM vorgesehen. Ferner ist zusätzlich zur ersten Spannplatte 10, der zweiten Spannplatte 12 und der Fixierplatte 8a eine zusätzliche mittlere Krafteinleitungsplatte 38 vorgesehen. Die mittlere Krafteinleitungsplatte 38 ist ebenfalls mehrteilig, nämlich aus drei Teilen ausgeführt. Sie kann in analoger Weise zu den zuvor beschriebenen Spannplatten 10, 12 um eine Mehrzahl von Leitungen, bzw. Kabeln herum angelegt werden. Der zusätzliche Versteifungsdichtkörper 36 ist ebenfalls mehrteilig ausgeführt, sodass er um die Leitungen herum angelegt werden kann. Es soll verstanden werden, dass in anderen Ausführungsformen noch weitere zusätzliche Versteifungsdichtkörper und weitere mittlere Krafteinleitungsplatten vorgesehen sein können. Bevorzugt besteht die mittlere Krafteinleitungsplatte 38 aus dem gleichen Material wie die erste Spannplatte 10, die Fixierplatte 8a und/oder die zweite Spannplatte 12. Bevorzugt besteht der zusätzliche Versteifungsdichtkörper 36 aus dem gleichen Material, z.B. EPDM, wie der erste Dichtkörper 2 und/oder der zweite Dichtkörper 4.

Gemäß dem Ausführungsbeispiel in Figur 2 ist eine radiale Abstufung der Platten 8a, 10, 12, 38, in axialer Richtung X vorgesehen. Die erste Spannplatte 10 weist den größten Radius der Platten, nämlich einen ersten Radius R1, auf. Die Fixierplatte 8a ist in ihren Radien kleiner als die erste Spannplatte 10, wobei die Fixierplatte 8a, wie in Bezug auf Figur 1 beschrieben, zwei Radien aufweist, nämlich den ersten mittleren Radius RM-1 und den zweiten mittleren Radius RM-2. Ein Radius RZ der zusätzlichen mittleren Krafteinleitungsplatte 38 ist wiederum kleiner als die Radien RM-1, RM-2 der Fixierplatte 8a. Die zweite Spannplatte 12 weist einen kleineren Radius, nämlich einen zweiten Radius R2 auf, der kleiner ist als die Radien RM-1, RM-2 der mittlere Krafteinleitungsplatte 38.

Auch die Dichtkörper 2, 4, 36 sind abgestuft ausgeführt, wobei der erste Dichtkörper 2 einen ersten größten Radius RD-MAX-1 aufweist, der zweite Dichtkörper 4 einen kleineren, zweiten größten Radius RD-MAX-2 aufweist und der Versteifungsdichtkörper 36 einen noch kleineren, dritten größten Radius RD-MAX-3 aufweist. In dem hier gezeigten Ausführungsbeispiel ist außerdem ein zusätzlicher Absatz 40 am ersten Dichtkörper 2 vorgesehen, sodass dieser neben einem ersten Abschnitt mit größtem Radius RD-MAX-1 einen zweiten Abschnitt mit einem ersten kleinen Radius RD-MIN-1 aufweist. Der erste kleine Radius RD-MIN-1 ist kleiner als der erste größte Radius RD-MAX-1, aber größer als der zweite größte Radius RD-MAX-2. Der erste Dichtkörper 2 und der zweite Dichtkörper 4 weisen Fasen 52 auf, die ein Einführen der Dichtungsvorrichtung 1 in den Aufnahmestutzen 100 erleichtern.

Der abgestufte Aufbau, sowohl der Dichtkörper 2, 4, 36 als auch der verschiedenen Platten 8a, 10, 12, 38 ermöglicht ein Einsetzen der zusammengesetzten Dichtungsvorrichtung 1 in den Aufnahmestutzen 100 bspw. einer Dichtpackung 90 in axialer Richtung X, wobei die erste Spannplatte 10 zuletzt eingeführt wird. Bevorzugt ist der Aufnahmestutzen 100 ebenfalls mit gegengleichen radialen Abstufungen in axialer Richtung X ausgeführt, sodass an den Abstufungen von Dichtungsvorrichtung 1 bzw. Aufnahmestutzen 100 Anschlagflächen ein weiteres axiales Verschieben der Dichtungsvorrichtung 1 in den Aufnahmestutzen 100 hinein verhindern, sobald dieser in einer Verpress-Position ist. Die Verpress-Position ist diejenige Position, an der kein weiteres Verschieben in axialer Richtung X vorgesehen ist. An dieser Position erfolgt ggf. ein Rotieren der Dichtungsvorrichtung 1, z.B. zum Schließen der Bajonettverbindung und anschließend ein Verpressen der Dichtkörper 2, 4 durch die Spannelemente 34. Die axialen Anschlagflächen, also die Kontaktflächen von Dichtungsvorrichtung 1 zu Aufnahmestutzen 100 senkrecht zur axialen Richtung X sind vorteilhafterweise und bevorzugt ebenfalls dazu ausgebildet, einen Teil der Axialkräfte und/oder Biegemomente, die im Betrieb auf die Dichtungsvorrichtung 1 wirken, in den Aufnahmestutzen 100 einzuleiten.

Bevorzugt und in der Ausführungsform der Dichtungsvorrichtung 1 gemäß Figur 2 realisiert weisen Dichtkörper 2, 4, 36 und Platten 8a, 10, 12, 38 einen abgestuften Aufbau mit in axialer Richtung X kleiner werdenden Radien wie eben beschrieben auf. Besonders bevorzugt sind derartige Radienunterschiede nicht zu groß, sodass die Dichtungsvorrichtung 1 von Spannelementen 24, vorzugsweise Schraubbolzen 26 axial so durchdrungen werden kann, dass sämtliche Dichtkörper 2, 4, 36 und sämtliche Spannplatten 10, 12, die Fixierplatte 8a und die zusätzliche mittlere Krafteinleitungsplatte 38 von den Schraubbolzen 26 durchdrungen werden. In dem in Figur 2 gezeigten Ausführungsbeispiel sind die Enden der Schraubbolzen 26, sowie Muttern 28 und Unterlegscheiben 30 erkennbar. Die Schraubbolzen 26, die sich in axialer Richtung X bis zur zweiten Spannplatte 12 erstrecken sind an dieser verschweißt und durchdringen sämtliche Dichtkörper 2, 4, 36 und die Platten 10, 8a, 38 ohne radial aus diesen auszutreten.

Es ist bevorzugt, dass das Verhältnis des ersten maximalen Dichtradius RD-MAX-1 im nicht verpressten Zustand zum zweiten maximalen Dichtradius RD-MAX-2 im nicht verpressten Zustand kleiner als 1,4, vorzugsweise 1,3, vorzugsweise 1,2, vorzugsweise 1,1 vorzugsweise 1,08 ist. Bevorzugt und vorteilhafterweise sind die Flächen in ihrer Geometrie, auf die die Spannkräfte der Spannelemente 24 wirken nicht zu unterschiedlich, sodass der erste Dichtkörper 2 und der zweite Dichtkörper 4 bei einem Spannen der Spannelemente 24 mit Pressdrücken beaufschlagt werden, die nicht zu sehr voneinander abweichen.

Es soll verstanden werden, dass in anderen Ausführungsformen weitere mittlere Krafteinleitungsplatten 38 (z.B. eine zweite, eine dritte, eine vierte Krafteinleitungsplatte) und weitere Versteifungsdichtkörper 36 (z.B. ein zweiter, ein dritter, ein vierter Versteifungsdichtkörper) vorgesehen sein können. Bevorzugt sind Elemente aus einer ersten Gruppe, umfassend die erste Spannplatte 10, die zweite Spannplatte 12, die Fixierplatte 8a und die wenigstens eine mittlere Krafteinleitungsplatte 38 mit Elementen aus einer zweiten Gruppe umfassend den ersten Dichtkörper 2, den zweiten Dichtkörper 4 und den wenigstens einen zusätzlichen Versteifungsdichtkörper 36 im Wechsel angeordnet. Besonders bevorzugt weist jede mittlere Krafteinleitungsplatte 38 wenigstens ein Krafteinleitelement 32 auf. Bevorzugt wird die Dichtungsvorrichtung 1 in einen Aufnahmestutzen 100 bspw. einer Dichtpackung 90 eingesetzt, wobei der Aufnahmestutzen 100 Aufnahmeelemente 130 aufweist, die dazu ausgebildet sind, die Krafteinleitelemente 32 aufzunehmen. Die Aufnahmeelemente 130 sind dazu ausgebildet, von außen auf die Dichtungsvorrichtung 1 wirkenden Lasten entgegen gerichtete Lagerkräfte und Lagermomente entgegenzustellen. Einer Verschiebung und/oder Verformung der Dichtungsvorrichtung 1, die eine Undichtigkeit der Dichtungsvorrichtung 1 zur Folge hätte, wird somit vorgebeugt.

Figur 3a zeigt eine Dichtungsvorrichtung 1 vor dem Einsetzen in einen Aufnahmestutzen 100 einer Bauwerkseinführung. Das Einsetzen erfolgt in axialer Richtung X. Die Bauwerkseinführung ist in dem hier gezeigten Beispiel eine Dichtpackung 90, wie sie etwa von der Anmelderin vertrieben wird.

In Figur 3b ist die Dichtungsvorrichtung 1 im Aufnahmestutzen 100 einer Bauwerkseinführung eingesetzt. Dichtungsvorrichtung 1 und Aufnahmestutzen 100 sind Bestandteile eines Dichtsystems 200. Der Aufnahmestutzen 100 weist eine Stutzen-Laibung 120 auf, die dazu ausgebildet ist im verpressten Zustand der Dichtungsvorrichtung 1 flächig und abdichtend in Kontakt mit der Dichtungsvorrichtung 1 zu sein. Die Stutzen-Laibung 120 ist in axialer Richtung X abgestuft. Die Abstufung ist gegengleich zur Abstufung der Dichtungsvorrichtung 1 ausgeführt, sodass der Aufnahmestutzen 100 die Dichtungsvorrichtung 1 aufnehmen kann.

Aufnahmeelemente 130 sind dazu ausgebildet, die Krafteinleitelemente, die in dem hier gezeigten Ausführungsbeispiel Elemente sind, die sich radial von der Fixierplatte 8a nach außen erstrecken, aufzunehmen. Aufnahmeelemente 130 und Krafteinleitelemente 32 sind dazu ausgebildet, eine formschlüssige, bevorzugt bajonettartige Verbindung miteinander einzunehmen. Im verbundenen Zustand wird eine Bewegung der Dichtungsvorrichtung 1 in axialer Richtung X blockiert. Bevorzugt werden außerdem Biegemomente durch die Aufnahmeelemente 130 aufgenommen. Es soll verstanden werden, dass Biegemomente und Axialkräfte nicht ausschließlich von dem Aufnahmeelemente 130 aufgenommen werden. Vielmehr können auch Dichtkörper, insbesondere der erste Dichtkörper 2 dazu ausgebildet sein, etwa an axialen Abstufungen Axialkräfte in den Aufnahmestutzen 100 einzuleiten.

An den Umfangsflächen, bzw. Kontaktflächen des ersten Dichtkörpers 2 zur Stutzen-Laibung 120 können auf die Dichtungsvorrichtung wirkende Querkräfte und/oder Biegemomente in den Aufnahmestutzen 100 eingeleitet werden. Dabei kann es zu lokalen Verformungen des Dichtkörpers, z.B. des ersten Dichtkörpers 2 kommen. Beispielsweise kann eine Kraft F quer zur axialen Richtung X gemäß der Abbildung in Figur 3b eine zusätzliche Kompression des ersten Dichtkörpers 2 in einem Kompressionsbereich 42 bewirken, während ein Entlastungsbereich 44 des ersten Dichtkörpers 2 entlastet wird.

Der Kompressionsbereich 42 und der Entlastungsbereich 44 sind hier schematisch dargestellt. Es soll verstanden werden, dass in der Realität ein gradueller Verlauf zu erwarten ist und/oder es durch verschiedene angreifende Kräfte zu komplexen, mehrdimensionalen Spannungszuständen kommen kann. Aufgrund der Verspannung der Dichtungsvorrichtung 1 durch Spannelemente 24 und der Elastizität der Dichtkörper 2, 4 ist eine Abdichtung zwischen dem ersten Dichtkörper 2 und der Stutzen-Laibung 120 über den kompletten Umfang der Stutzen-Laibung 120 zu erwarten, auch wenn lokal eine Entlastung 44 des ersten Dichtkörpers 2 vorliegt. Bei sehr starken Lasten, z.B. infolge dickerer Leitungsquerschnitte und hoher Belastungen besteht jedoch für herkömmliche Dichtungsvorrichtungen die Gefahr lokaler Undichtigkeiten, insbesondere in Entlastungsbereichen 44.

Die erfindungsgemäße Dichtungsvorrichtung 1 leitet Lasten durch die Fixierplatte 8a und die an der Fixierplatte 8a angeordneten Krafteinleitelemente 24 in den Aufnahmestutzen 100, vorzugsweise in die Aufnahmeelemente 130 des Aufnahmestutzens 100 ein. Der Aufnahmestutzen 100 trägt Lasten in das Mauerwerk 110, bzw. in das Bauwerk ab. Der zweite Dichtkörper 4 wird durch diesen Aufbau entlastet. Vorteilhafterweise und bevorzugt kommt es somit nicht, bzw. weniger stark ausgeprägt zu lokal unterschiedlichen Kompressionen/ Entlastungen des Dichtkörpers 4, welche eine Undichtigkeit zwischen einer Umfangsfläche des Dichtkörpers 4 und der Stutzen-Laibung 120 des Aufnahmestutzens 100 hervorrufen könnten.

Die hier beschriebene Wirkweise wirkt in analoger Weise bezüglich möglicher Kompressionen bzw. Entlastungen im Bereich der Kontaktflächen zwischen einer Dichtkörper-Laibung der Dichtkörper 2, 4 und einer Außenoberfläche der einzuführenden Leitungen bzw. Kabel. Hier wird durch die Fixierplatte 8a und die an der Fixierplatte 8a angeordneten Krafteinleitelemente 32 vorteilhafterweise ebenfalls bewirkt, dass zumindest im Bereich des zweiten Dichtkörpers 4 die Gefahr von Undichtigkeiten reduziert wird.

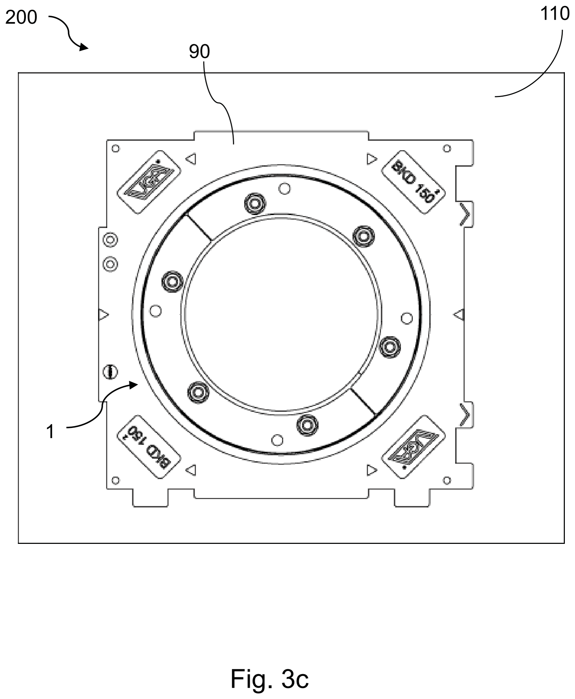

Eine Draufsicht auf die eingebaute Dichtungsvorrichtung 1 in den Aufnahmestutzen 100 einer Bauwerkseinführung zeigt die Figur 3c. In diesem Fall ist die Bauwerkseinführung eine Dichtpackung 90 des Typs "BKD 150", wie er von der Anmelderin vertrieben wird. Mehrere derartige Dichtpackungen 90 lassen sich nebeneinander anordnen und durch Einrastsysteme miteinander verbinden, so dass eine Mehrzahl an Dichtsystemen 200 vorgesehen werden kann.

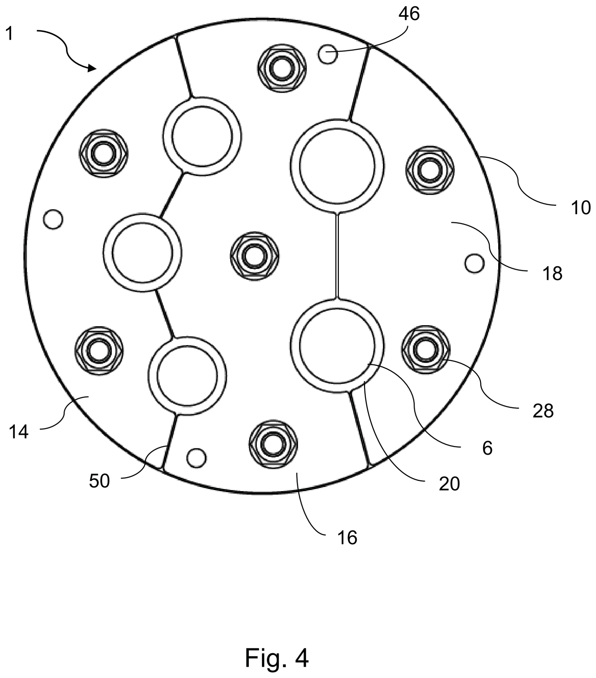

In Figur 4 ist eine Draufsicht auf die Ausführungsform der Dichtungsvorrichtung 1 aus Figur 1 abgebildet. Die Dreiteilung der ersten Spannplatte 10 in den ersten Teil 14, den zweiten Teil 16 und den dritten Teil 18 ist hier besonders gut erkennbar. Die Teilungen erfolgen entlang zueinander abgewinkelten Kanten 50, wobei die Kanten 50 am radialen Umfang der ersten Spannplatte 10 und/oder an Löchern 22 enden. Es ist ersichtlich, dass im zusammengesetzten Zustand die Löcher 22 der ersten Spannplatte 10 einen größeren Durchmesser aufweisen, als die Öffnungen 6 des ersten Dichtkörpers 2. Ferner sind die Muttern 28 der Mutter-Schraubbolzen Paarungen 25 zu erkennen. Außerdem sind vier Verdreh-Bohrungen 46 gezeigt. Diese sind dazu ausgebildet, von einem Verdreh-Werkzeug gefasst zu werden, um die zusammengesetzte Dichtungsvorrichtung 1 nach einem axialen Einführen der Dichtungsvorrichtung 1 in den Aufnahmestutzen 100 bspw. einer Dichtpackung 90 rotatorisch zu verdrehen. Somit werden die Krafteinleitelemente 32 in die entsprechenden Aufnahmevorrichtungen 120 des Aufnahmestutzens 100 gedreht. Die Dichtungsvorrichtung 1 ist dann gegen Verschieben in axialer Richtung X gesichert.

Figur 5a zeigt eine zweite Ausführungsform einer Dichtungsvorrichtung 1. In dieser Ausführungsform können bis zu drei Leitungen eingelegt werden. Die Figuren 5b und 5c zeigen eine Seitansicht bzw. eine Draufsicht derselben Ausführungsform. Die Spannplatten 10, 12 und die Fixierplatte 8a sind wieder mehrteilig, nämlich dreiteilig ausgeführt. An Grenzen der Teile 14, 16, 18 zueinander verlaufen Kanten 50, wobei diese in einem Mittelpunkt der Spannplatten 10,12, bzw. der Fixierplatte 8a abgewinkelt sind. In Figur 5a ist angedeutet zu erkennen, dass die Kanten 50 der ersten Spannplatte 10, der zweiten Spannplatte 12, und der Fixierplatte 8a in axialer Richtung X fluchtend übereinander liegen. In anderen Ausführungsformen ist es bevorzugt, dass die Teile der ersten Spannplatte 10, der Fixierplatte 8a und der zweiten Spannplatte 12 versetzt zueinander angeordnet sind oder dass ein unterschiedlicher Aufbau der Teile für die verschiedenen Spannplatten 10,12 und die Fixierplatte 8a vorgesehen ist.

Die Kanten 50 sind kreisförmig unterbrochen, und die kreisförmigen Unterbrechungen bilden im zusammengesetzten Zustand Löcher 20, durch die Leitungen eingeführt werden können. In dem hier gezeigten Beispiel sind in den ersten Dichtkörper 2 ein Blindstopfen 48 eingesetzt. Der Blindstopfen 48 ist zylinderförmig. Beim Einbau der Dichtungsvorrichtung 1 in ein Bauwerk kann die Dichtungsvorrichtung 1 durch Lösen der Mutter-Schraubbolzen Paarungen 25 zerlegt werden. Blindstopfen 48 können entfernt werden. Der erste Dichtkörper 2, der zweite Dichtkörper 4, und die Spannplatten 10, 12, sowie die Fixierplatte 8a werden um die abzudichtenden Leitungen herum positioniert und durch Befestigen der Mutter-Schraubbolzen Paarungen 25 wird die Dichtungsvorrichtung 1 zusammengesetzt. Zum Einlegen der Leitungen in den ersten Dichtkörper 2 und den zweiten Dichtkörper 4 weisen diese Schlitze 3 in axialer Richtung X auf. Aufgrund der Verformbarkeit des elastischen Materials der Dichtkörper 2, 4 können diese so geöffnet werden, dass die abzudichtende Leitung in die Öffnungen 6 der Dichtkörper 2, 4 eingesetzt werden können. Die erste Spannplatte 10 weist drei Verdreh-Bohrungen 46 auf. Diese sind dazu ausgebildet, von einem Verdreh-Werkzeug gefasst zu werden, sodass die Dichtungsvorrichtung 1 bajonettartig in entsprechende Aufnahmeelemente 120 eines Aufnahmestutzens 100 eingesetzt werden kann.

In der hier gezeigten Ausführungsform sind insgesamt neun Spannelemente 24 vorgesehen, wobei diese gleichmäßig auf den ersten Teil 14, den zweiten Teil 16 und den dritten Teil 18 verteilt sind. Bei gleichmäßigem Anziehen der Muttern 28 kann somit ein möglichst homogenes Verpressen der Dichtkörper 2, 4, d.h. eine gleichmäßige Kraftverteilung auf die Stirnflächen der Dichtkörper 2,4 erfolgen.

In der Seitansicht der zweiten Ausführungsform in Figur 5b ist die radiale Abstufung der Spannplatten 10, 12, bzw. der Fixierplatte 8a, sowie der Dichtkörper 2, 4 gut zu erkennen. In der Draufsicht auf die zweite Ausführungsform in Figur 5c sind Schlitze 3 der Öffnungen 6 des ersten Dichtkörpers 2 in der Draufsicht erkennbar. Es kann ein, zwei oder mehrere derartige Schlitze 3 pro Öffnung vorgesehen sein.

Eine weitere Ausführungsform ist in den Figuren 6a - 6c dargestellt. Die Dichtungsvorrichtung 1 ist dazu ausgebildet, eine Leitung aufzunehmen. Die Spannplatten 10, 12 und die Fixierplatte 8a weisen hierfür einen ersten Teil 14, und einen zweiten Teil 16 auf. An jedem Teil 14,16 sind jeweils drei Mutter-Schraubbolzen Paarungen 25 als Spannelemente 24, sowie je zwei Verdreh-Bohrungen 46 vorgesehen. Eine solche Ausführungsform kann bevorzugt zur Aufnahme von Leitungen mit besonders großem Durchmesser, z.B. 150 mm, verwendet werden. Es kann auch vorgesehen sein, dass in die Dichtkörper 2, 4 schalenartige, runde Einlagen eingelegt werden, um etwaige Abweichungen eines Leitungsdurchmessers zum Durchmesser der Dichtkörper 2, 4 auszugleichen. In anderen Ausführungsformen sind die Spannplatten 10, 12, bzw. die Fixierplatte 8a nicht in zwei oder mehrere Teile zerlegbar, sondern weisen z.B. Gelenke auf, die dazu ausgebildet sind, die Dichtungsvorrichtung 1 aufzuklappen und zu schließen, sodass eine Leitung eingelegt werden kann.

Als Krafteinleitelemente 32 sind sich von der Fixierplatte 8a radial erstreckende Elemente vorgesehen, welche dazu ausgebildet sind mit Aufnahmeelementen 120 des Aufnahmestutzens bspw. einer Dichtpackung 90 eine bajonettartige, formschlüssige, lösbare Verbindung einzugehen. In anderen Ausführungsformen kann das Krafteinleitelement 32 anders ausgebildet sein, z.B. als Gewinde und/oder stoffschlüssig und nicht lösbar, etwa durch Applikation von Klebstoff.

In diesem Beispiel sind die äußersten Durchmesser der Fixierplatte 8a und der ersten Spannplatte 10 annähernd gleich groß (vgl. Figur 6b), während die zweite Spannplatte etwas kleiner ist. Der erste Dichtkörper 2 weist einen größeren Durchmesser auf als der zweite Dichtkörper 4. Die Dichtkörper 2,4 sind geschlitzt mit einem Schlitz 3 ausgeführt (vgl. Figur 6c).

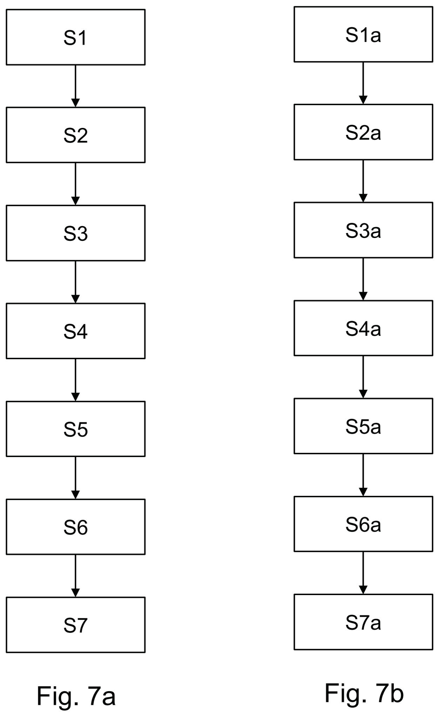

Figur 7a illustriert eine Schrittabfolge zum Durchführen eines erfindungsgemäßen Verfahrens zum Einbau wenigstens einer wasserdichten Leitungseinführung in ein Bauwerkseinführung, wie bspw. in eine Dichtpackung 90. In einem ersten Schritt wird der Aufnahmestutzen 100 an einer geplanten Wandposition positioniert (S1). Der Aufnahmestutzen 100 wird dann mit einem fließfähigen, später erstarrenden Material, vorzugsweise Beton oder Mörtel umgossen (S2). Durch den Aufnahmestutzen 100 wird wenigstens eine abzudichtende Leitung eingeführt (S3). Die wenigstens eine Leitung wird mit einer erfindungsgemäßen Dichtungsvorrichtung 1 umschlossen (S4). Hierzu kann die Dichtungsvorrichtung 1 in verschiedene Teile, z.B. den ersten Teil 14 und den zweiten Teil 16, zerlegt werden. Die Leitung kann dann eingesetzt werden und die Teile 14, 16 der Spannplatte derart wieder zusammengesetzt werden, dass der erste Teil 14 und der zweite Teil 16 die wenigstens eine Leitung umschließen. Die Dichtkörper 2, 4 können Schlitze 3 aufweisen, durch die wenigstens eine Leitung eingeführt wird oder ebenfalls in mehrere Teile zerlegbar sein. Mit den Spannelemente 32 wird die Dichtungsvorrichtung 1 zusammengesetzt. In einem nachfolgenden Schritt wird die Dichtungsvorrichtung 1 in der axialen Richtung X in den Aufnahmestutzen 100 verschoben (S5). Bevorzugt unterstützen an der Dichtungsvorrichtung 1 und/ oder an dem Aufnahmestutzen 100 vorgesehene Fasen 52 das axiale Einführen. Bevorzugt ist wenigstens eine Anschlagfläche vorgesehen, welche bei einem ausreichenden axialen Verschieben ein weiteres axiales Verschieben in die axiale Richtung X verhindert. Bevorzugt gleitet die Dichtungsvorrichtung 1 in die axiale Richtung X auf der von der Dichtungsvorrichtung 1 ummantelten Leitung bzw. auf dem Kabel, bzw. ist im nicht verpressten Zustand dazu ausgebildet, relativ zur Leitung bewegt zu werden. Es ist aber auch bevorzugt, dass die Dichtungsvorrichtung 1 gemeinsam mit der Leitung bzw. dem Kabel axial in den Aufnahmestutzen 100 bewegt wird.

In einem nächsten Schritt wird die Dichtungsvorrichtung 1 mit dem Aufnahmestutzen 100 verbunden (S6). Bevorzugt erfolgt dies durch Rotation der Dichtungsvorrichtung 1 relativ zum Aufnahmestutzen 100. Bevorzugt rasten hierbei Krafteinleitelemente 32 der Fixierplatte 8a in entsprechende Aufnahmeelemente 130 des Aufnahmestutzens 100 ein. Bevorzugt wird hierzu einen Verdreh-Werkzeug verwendet, welches an Verdreh-Elementen, vorzugsweise Verdreh-Bohrungen 46 der ersten Spannplatte 10 oder der zweiten Spannplatte 12 angreift. Nach dem Verdrehen ist die Dichtungsvorrichtung axial gesichert, d. h. es kann kein bzw. nur ein begrenztes axiales Verschieben der Dichtungsvorrichtung 1, insbesondere der Fixierplatte 8a erfolgen.

In einem siebten Schritt S7 werden die Dichtkörper 2,4 zum Abdichten der Leitung durch Spannen von Spannelementen 24 verpresst. Dies erfolgt beispielsweise durch Anziehen von Schraubbolzen-Mutter Paarungen 25. Dabei komprimieren die Spannplatten 10, 12 die Dichtkörper 2, 4 in axialer Richtung. Die Dichtkörper 2, 4 dehnen sich radial aus und verschließen etwaige Zwischenräume, Schlitze, Spalte oder dergleichen zwischen den Dichtkörpern 2, 4 und der Stutzen-Laibung 120 des Aufnahmestutzens 100, sowie zwischen den Dichtkörpern 2, 4 und der eingeführten wenigstens einen Leitung, bzw. dem eingeführten wenigstens einen Kabel.

In dem Verfahren gemäß Figur 7b wird die Dichtungsvorrichtung 1 in dem Aufnahmestutzen 100 positioniert und fixiert, bevor die Leitung(en) eingeführt werden. Die einzelnen Verfahrensschritte gemäß dem Verfahren in Figur 7b sind: Positionieren (S1a) eines Aufnahmestutzens 100 an einer geplanten Wandposition; Umgießen (S2a) des Aufnahmestutzens 100 mit einem fließfähigen, dann erstarrenden Material, vorzugsweise Beton oder Mörtel; Einsetzen bzw. Einbau (S3a) einer Dichtungsvorrichtung 1 nach einer der vorstehend beschriebenen bevorzugten Ausführungsformen; axiales Verschieben (S4a) der Dichtungsvorrichtung 1 in den Aufnahmestutzen 100; Rotation (S5a) der Dichtungsvorrichtung 1 relativ zum Aufnahmestutzen 100 zum Schließen einer Verbindung zwischen Aufnahmestutzen 100 und Dichtungsvorrichtung 1; Einführen (S6a) wenigstens einer Leitung durch Dichtungsvorrichtung 1 in dem Aufnahmestutzen 100; und Verpressen (S7a) des ersten Dichtkörpers 2 und/ oder des zweiten Dichtkörpers 4 zum Abdichten der Leitung durch Spannen von Spannelementen 24.

### Bezugszeichenliste:

- 1: Dichtungsvorrichtung
- 2: erster Dichtkörper
- 3: Schlitz
- 4: zweiter Dichtkörper
- 6: Öffnung
- 8: Fixierelement
- 8a: Fixierplatte
- 10: erste Spannplatte
- 12: zweite Spannplatte
- 14: erster Teil
- 16: zweiter Teil
- 18: dritter Teil
- 20: Aussparung
- 22: Loch
- 24: Spannelement
- 25: Mutter-Schraubbolzen-Paarung
- 26: Schraubbolzen
- 28: Mutter
- 30: Unterlegscheibe
- 20a: erste kreisförmige Aussparung
- 20b: zweite kreisförmige Aussparung
- 20c: dritte kreisförmige Aussparung
- 32: Krafteinleitelement
- 34: Fuß
- 35: Kopf
- 36: Versteifungsdichtkörper
- 38: Krafteinleitungsplatte
- 40: Absatz
- 42: Kompressionsbereich
- 44: Entlastungsbereich
- 46: Verdreh-Bohrung
- 48: Blindstopfen
- 50: Kante
- 52: Fase
- 90: Dichtpackung
- 100: Aufnahmestutzen
- 110: Mauerwerk
- 120: Stutzen-Laibung
- 130: Aufnahmeelement
- 200: Dichtsystem
- F: Kraft
- X: axiale Richtung
- RZ: Radius der mittleren Krafteinleitungsplatte
- RM-1: erster mittlerer Radius
- RM-2: zweiter mittlerer Radius
- RD-MAX-1: erster größter Radius
- RD-MAX-2: zweiter größter Radius
- RD-MAX-3: dritter größter Radius
- RD-MIN-1: erster kleiner Radius

## Patentansprüche

1. Dichtungsvorrichtung (1) zum Abdichten wenigstens einer Leitung, vorzugsweise eines Kabels und/oder eines Rohres, in einem Aufnahmestutzen (100) einer Bauwerkseinführung, insbesondere einer Dichtpackung (90), umfassend:
wenigstens einen ersten Dichtkörper (2) und einen zweiten Dichtkörper (4),
eine erste Spannplatte (10) an einem ersten axialen Ende der Dichtungsvorrichtung (1),
eine zweite Spannplatte (12) an einem zweiten axialen Ende der Dichtungsvorrichtung (1),
wenigstens ein Spannelement (24), wobei der erste Dichtkörper (2) und/oder der zweite Dichtkörper (4) dazu ausgebildet sind, durch das wenigstens eine Spannelement (24) verpresst zu werden,
und ein Fixierelement (8), wobei das Fixierelement (8) wenigstens ein Krafteinleitelement (32) aufweist, das dazu ausgebildet ist, auf die Dichtungsvorrichtung (1) wirkende mechanische Lasten abzutragen,
wobei das Krafteinleitelement (32) dazu ausgebildet ist, sowohl Axialkräfte in einer axialen Richtung (X) als auch entgegengesetzt zur axialen Richtung (X) aufnehmen zu können,
wobei der erste Dichtkörper (2), der zweite Dichtkörper (4) und das Fixierelement (8) zwischen der ersten Spannplatte (10) und der zweiten Spannplatte (12) angeordnet sind.

2. Dichtungsvorrichtung nach Anspruch 1, wobei das Fixierelement (8) zwischen dem ersten Dichtkörper (2) und dem zweiten Dichtkörper (4) angeordnet ist,
wobei das Fixierelement (8) vorzugsweise eine Fixierplatte (8a) ist.

3. Dichtungsvorrichtung (1) nach einem der vorstehenden Ansprüche, wobei sich von dem Fixierelement (8) wenigstens ein Krafteinleitelement (32) radial nach außen erstreckt.

4. Dichtungsvorrichtung (1) nach einem der vorstehenden Ansprüche, wobei das Fixierelement (8) dazu ausgebildet ist, in einem eingesetzten Zustand mit dem Aufnahmestutzen (100) der Bauwerkseinführung, insbesondere der Dichtpackung (90), eine lösbare Verbindung einzunehmen,
wobei das Fixierelement (8) vorzugsweise dazu ausgebildet ist, Biegemomente um Biegeachsen aufzunehmen, die im Wesentlichen orthogonal zur axialen Richtung (X) sind.

5. Dichtungsvorrichtung (1) nach einem der vorstehenden Ansprüche, wobei das Krafteinleitelement (32) dazu ausgebildet ist, in einem eingesetzten Zustand mit dem Aufnahmestutzen (100) der Bauwerkseinführung, insbesondere einer Dichtpackung (90), einen Formschluss zu bilden,
wobei das Fixierelement (8) vorzugsweise dazu ausgebildet ist, Biegemomente um Biegeachsen aufzunehmen, die im Wesentlichen orthogonal zur axialen Richtung (X) sind.

6. Dichtungsvorrichtung (1) nach einem der vorstehenden Ansprüche, wobei das Krafteinleitelement (32) bajonettartig mit dem Aufnahmestutzen (100) der Bauwerkseinführung, insbesondere Dichtpackung (90), koppelbar und lösbar ist.

7. Dichtungsvorrichtung (1) nach einem der vorstehenden Ansprüche, wobei das Verhältnis einer axialen Erstreckung des ersten Dichtkörpers (2) im nicht verpressten Zustand zu einer axialen Erstreckung des zweiten Dichtkörpers (4) im nicht verpressten Zustand in einem Bereich von 0,5 bis 1,5, vorzugsweise von 0,6 bis 1,4, besonders bevorzugt von 0,7 bis 1,3, insbesondere bevorzugt von 0,8 bis 1,2 liegt.

8. Dichtungsvorrichtung (1) nach einem der vorstehenden Ansprüche, wobei die erste Spannplatte (10) einen ersten Radius (R1) aufweist, die zweite Spannplatte (12) einen zweiten Radius (R2) aufweist und wobei die Fixierplatte (8a) einen ersten mittleren Radius (RM-1) und einen zweiten mittleren Radius RM-2 aufweist, wobei der erste mittlere Radius (RM-1) der Radius ist, der sich vom Mittelpunkt der Fixierplatte (8a) zu einem Fuß (34) des Krafteinleitelements (32) erstreckt, und der zweite mittlere Radius (RM-2) derjenige Radius ist, der sich vom Mittelpunkt der Fixierplatte (8a) bis zu einem Kopf (35) des Krafteinleitelements (32) erstreckt, wobei der erste Radius (R1) größer oder gleich dem zweiten mittleren Radius (RM-2) ist, der zweite mittlere Radius (RM-2) größer als der erste mittlere Radius (RM-1) ist und der zweite Radius (R2) größer oder gleich dem ersten mittleren Radius (RM-1) ist.

9. Dichtungsvorrichtung (1) nach einem der vorstehenden Ansprüche, wobei der erste Dichtkörper (2) zwischen der ersten Spannplatte (10) und dem Fixierelement (8) angeordnet ist und einen ersten maximalen Dichtradius (RD-MAX-1) aufweist und wobei der zweite Dichtkörper (4) zwischen dem Fixierelement (8) und der zweiten Spannplatte (12) angeordnet ist und einen zweiten maximalen Dichtradius (RD-MAX-2) aufweist, wobei der erste maximale Dichtradius (RD-MAX-1) größer ist als der zweite maximale Dichtradius (RD-MAX-2),
wobei vorzugsweise das Verhältnis des ersten maximalen Dichtradius (RD-MAX-1) im nicht verpressten Zustand zum zweiten maximalen Dichtradius (RD-MAX-2) im nicht verpressten Zustand kleiner als 1,4, vorzugsweise 1,3, besonders bevorzugt 1,2, insbesondere bevorzugt 1,1, speziell bevorzugt 1,08 ist.

10. Dichtungsvorrichtung (1) nach einem der vorstehenden Ansprüche, wobei der erste Dichtkörper (2) und/oder der zweite Dichtkörper (4) einen Absatz (40) aufweisen, sodass der erste Dichtkörper (2) einen zusätzlichen Abschnitt mit einem ersten minimalen Dichtradius (RD-MIN-1), der kleiner ist als der erste maximale Dichtradius (RD-MAX-1) und/oder sodass der zweite Dichtköper einen zusätzlichen Abschnitt mit einem zweiten minimalen Dichtradius (RD-MIN-2), der kleiner ist als der zweite maximale Dichtradius (RD-MAX-2) aufweist.

11. Dichtungsvorrichtung (1) nach einem der vorstehenden Ansprüche, ferner umfassend wenigstens einen zusätzlichen Versteifungsdichtkörper (36) und/oder wenigstens eine zusätzliche mittlere Krafteinleitungsplatte (38), wobei erste Elemente aus einer ersten Gruppe, umfassend die erste Spannplatte (10), die zweite Spannplatte (12), die Fixierplatte (8a) und die wenigstens eine mittlere Krafteinleitungsplatte (38) im Wechsel mit zweiten Elementen aus einer zweiten Gruppe, umfassend den ersten Dichtkörper (2), den zweiten Dichtkörper (4) und den wenigstens einen zusätzlichen Versteifungsdichtkörper (36) angeordnet sind,
wobei vorzugsweise jede mittlere Krafteinleitungsplatte (38) ein Krafteinleitelement (32) aufweist, das dazu ausgebildet ist, mechanische Lasten in entsprechende Aufnahmestutzen (100) der Bauwerkseinführung, insbesondere Dichtpackung (90), einzuleiten.

12. Dichtsystem (200) aufweisend einen Aufnahmestutzen (100) einer Bauwerkseinführung, insbesondere einer Dichtpackung (90), eines Bauwerks und eine Dichtungsvorrichtung (1) nach einem der vorstehenden Ansprüche, wobei der Aufnahmestutzen (100) wenigstens ein Aufnahmeelement (130) aufweist, das dazu ausgebildet ist, mit dem wenigstens einen Krafteinleitelement (32) der Dichtungsvorrichtung (1) in Eingriff zu kommen.

13. Verwendung eines Dichtsystems (200) nach Anspruch 12 zum Einbau in ein Wand- oder Bodenelement eines Bauwerks, wobei fließfähiges Material, vorzugsweise Beton oder Mörtel, welches dann erstarrt, das Dichtsystem (200) umschließt.

14. Verfahren zum Einbau wenigstens einer Leitungseinführung in ein Bauwerk, umfassend die Schritte:
S1 Positionieren eines Aufnahmestutzens (100) an einer geplanten Wandposition;
S2 Umgießen des Aufnahmestutzens (100) mit einem fließfähigen, dann erstarrenden Material, vorzugsweise Beton oder Mörtel;
S3 Einführen wenigstens einer Leitung durch den Aufnahmestutzen 100;
S4 Umschließen der wenigstens einen Leitung mit einer Dichtungsvorrichtung (1) nach einem der Ansprüche 1-11;
S5 Axiales Verschieben der Dichtungsvorrichtung (1) entlang der wenigstens einen Leitung in den Aufnahmestutzen (100);
S6 Rotation der Dichtungsvorrichtung (1) relativ zum Aufnahmestutzen (100) zum Schließen einer Verbindung zwischen Aufnahmestutzen (100) und Dichtungsvorrichtung (1);
S7 Verpressen des ersten Dichtkörpers (2) und/ oder des zweiten Dichtkörpers (4) zum Abdichten der Leitung durch Spannen von Spannelementen 24.

15. Verfahren zum Einbau wenigstens einer Leitungseinführung in ein Bauwerk, umfassend die Schritte:
S1a Positionieren eines Aufnahmestutzens (100) an einer geplanten Wandposition;
S2a Umgießen des Aufnahmestutzens (100) mit einem fließfähigen, dann erstarrenden Material, vorzugsweise Beton oder Mörtel;
S3a Einsetzen bzw. Einbau einer Dichtungsvorrichtung (1) nach einem der Ansprüche 1-11;
S4a Axiales Verschieben der Dichtungsvorrichtung (1) in den Aufnahmestutzen (100);
S5a Rotation der Dichtungsvorrichtung (1) relativ zum Aufnahmestutzen (100) zum Schließen einer Verbindung zwischen Aufnahmestutzen (100) und Dichtungsvorrichtung (1);
S6a Einführen wenigstens einer Leitung durch Dichtungsvorrichtung (1) in dem Aufnahmestutzen (100);
S7a Verpressen des ersten Dichtkörpers (2) und/ oder des zweiten Dichtkörpers (4) zum Abdichten der Leitung durch Spannen von Spannelementen (24).
